# EUROPÄISCHE PATENTANMELDUNG

(11) **EP 0 875 647 A1**
(43) Veröffentlichungstag der Anmeldung: **04.11.1998**
(21) Anmeldenummer: 98107319.0
(22) Anmeldetag: 22.04.1998
(51) Int. Cl.: E05D 1/02, B32B 5/28, B64G 1/22, B64G 1/44, B64G 1/66

(54) **Gelenk für Anwendungen in der Raumfahrt**

(30) Priorität: 02.05.1997 DE 19718671
(71) Anmelder: DORNIER GmbH, 88039 Friedrichshafen (DE)
(72) Erfinder: Kutscheid, Thomas, 88709 Meersburg (DE)
(74) Vertreter: Landsmann, Ralf

(57) **Zusammenfassung**

Gelenk für Anwendungen in der Raumfahrt, bestehend aus einem Streifen eines ausgehärteten Faserverbundwerkstoffes, der aus zwei miteinander verbundenen faserverstärkten Materialien besteht, wobei eines der Materialien eine geradlinig verlaufende Trennfuge aufweist und das andere Material im Bereich der Trennfuge geknickt wird.

## Beschreibung

Die Erfindung betrifft ein Gelenk für Anwendungen in der Raumfahrt, bestehend aus einem Streifen eines ausgehärteten Faserverbundwerkstoffs, der aus zwei miteinander verbundenen faserverstärkten Materialien besteht.

In der IPC sind Gelenke für einen Auslegerarm eines Satelliten in B 64 G, 1/44 (z.B. DE 195 23 236 C1) und in B 64 G, 1/64 sowie B 64 G, 1/66 (z.B. EP 0 751 066 A1) klassifiziert. Andere bekannte Gelenke für die Raumfahrt bestehen in der Regel aus:
- zwei metallischen Frästeilen mit komplexer Geometrie zur Befestigung an den drehbar zu verbindenden Bauteilen sowie zur Aufnahme der Kugellager
- zwei Schrägkugellagern
- der geschliffenen Welle mit zwei Aufnahmegewinden
- mehreren Deckscheiben und Spannscheiben
- zwei Spannschrauben
- einer aufwendigen Thermalisolation, die die Drehbewegung mitmachen muss, ohne diese zu behindern.

Die Realisierung solcher Gelenke ist technisch aufwendig und verursacht sehr hohe Kosten.

Aufgabe der Erfindung ist es, bei einigen Anwendungen für Gelenke beim Einsatz in der Raumfahrt wie zum Beispiel zum Ausklappen eines Solargenerators, dem Ausklappen von Reflektoren und flachen Antennen sowie für das Entfalten grosser Antennenschalen, eine technisch wesentlich einfachere Art der Lagerung vorzusehen, wobei die Rotation nur über einen begrenzten Winkelbereich erfolgt und die Anzahl der Drehvorgänge während der Lebensdauer gering ist. Bei vielen Raumfahrtanwendungen findet der Ausklappvorgang im Orbit nur einmal statt. Im Rahmen der Qualifikation fallen typischerweise zwischen 10 und 300 Klappvorgänge an.

Diese Aufgabe wird erfindungsgemäss durch den Gegenstand des Hauptanspruchs gelöst. Die Unteransprüche betreffen vorteilhafte Ausgestaltungen der Erfindung.

Der Einsatz des erfindungsgemässen Faserverbundgelenks für die oben an-gegebenen Aufgabe bietet folgende Vorteile im Vergleich zu herkömmlichen Gelenklagern:
- Die Gelenklagerung wird wesentlich leichter und beansprucht weniger Platz. Das reine Gelenkband wiegt je nach Ausführung nur etwa 1-100 g/m. Hinzu kommen gegebenenfalls Anschlagleisten mit Justiermöglichkeiten für die Befestigung und die Ausrichtung, so dass eine Masse von weniger als 1 kg für das Faserverbundgelenk eines Ausklappreflektors erreichbar ist.
- Eine Thermalisolation, die für übliche Drehgelenke wegen der möglichst reibungsfreien Schwenkung vergleichsweise aufwendig und schwer ist, ist für das Faserverbundgelenk nicht erforderlich.
- Durch den Wegfall von üblichen Lagern sowie den möglichen Verzicht auf die mitzubewegende Thermalisolation erhöht sich die Zuverlässigkeit. Dies ist ein sehr wichtiges Argument insbesondere für Raumfahrtanwendungen, da eine Fehlfunktion beim Ausklappen häufig das Ende der Mission bedeutet.
- Das Faserverbundgelenk erfordert einen erheblich geringeren Aufwand und reduziert die Kosten für Entwurf, Dokumentation und Fertigung.
- Das Faserverbundgelenk stellt keinen Mechanismus im klassischen Sinne dar und ist somit nicht den hohen Qualifikationsanforderungen eines herkömmlichen Gelenks zu unterwerfen. Dies reduziert den Aufwand für die Verifikation.
- Das Faserverbundgelenk umgeht die Problematik der "unzuverlässigen" Reibung weitgehend und kommt daher mit geringerem Drehmomentenüberschuss beim Antrieb aus. Insbesondere wird erwartet, dass seine Eigenschaften nur unwesentlich von der Temperatur abhängen.
- Die Funktion ist über einen grossen Temperaturbereich - insbesondere auch im kalten Fall - gewährleistet.
- Das Gelenk kann aus thermoelastisch stabilen Werkstoffen hergestellt werden, was den Einsatz in Verbindung mit den vielfach verwendeten Kohlefaserverbundstrukturen erleichtert.

Die Erfindung wird nachfolgend anhand von Figuren näher erläutert.

Es zeigen:
- Fig. 1: ein Gelenk aus Faserverbundwerkstoff mit einer V-förmig gestalteten Trennfuge,
- Fig. 2: ein Gelenk aus Faserverbundwerkstoff mit einer U-förmigen Trennfuge,
- Fig. 3: ein Gelenk aus Faserverbundwerkstoff mit einer rechteckförmigen Trennfuge,
- Fig. 4: den Schwenkbereich eines Faserverbundgelenks,
- Fig. 5 und 6: ein Beispiel für die Fertigung eines erfindungsgemässen Faserverbundgelenks,
- Fig. 7 und 8: ein Faserverbundgelenk an einem Antennenreflektor,
- Fig. 9: den Ausfaltvorgang einer SAR-Antenne,
- Fig. 10 bis 11: einen Faltreflektor mit Faserverbundgelenken in gestauter und entfalteter Konfiguration.

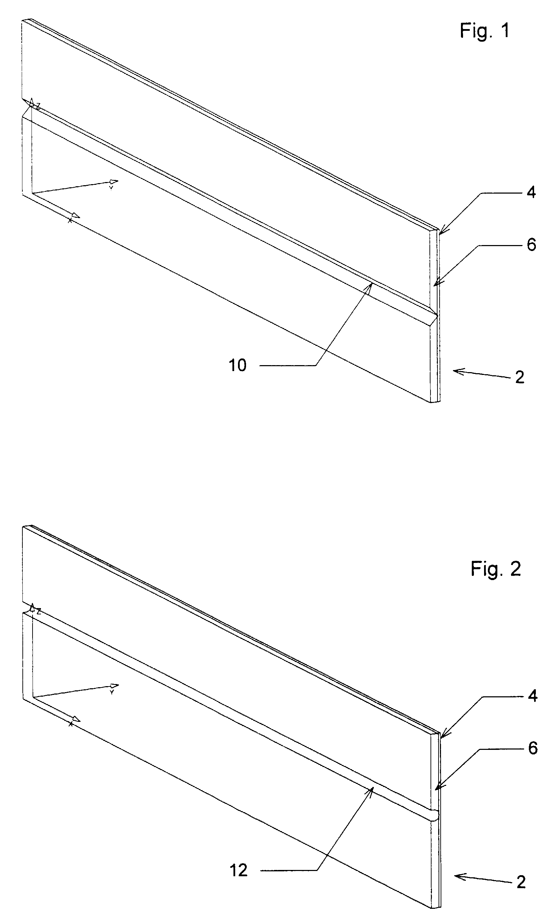

Fig. 1 bis 3 zeigen jeweils einen Streifen **2** eines ausgehärteten Faserverbundwerkstoffs, der aus zwei miteinander verbundenen Faserverbundwerkstoffen **4, 6** besteht. Jeweils eines der Materialien **4, 6** weist eine geradlinig verlaufende Trennfuge **8** auf. Das andere Material kann im Bereich der Trennfuge **8** geknickt werden.

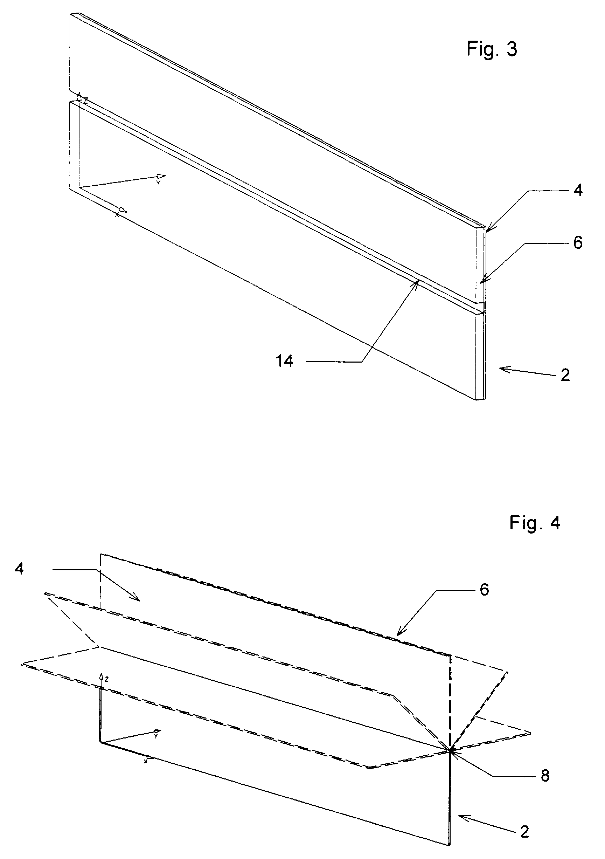

In Fig. 1 ist die Trennfuge **8** eine V-förmig gestaltete Nut **10**. In Fig. 2 ist die Trennfuge eine U-förmig gestaltete Nut **12**. In Fig. 3 ist die Trennfuge eine rechteckförmige Nut **14**. Die Materialien **4, 6** können beispielsweise aramidfaserverstärkter Kunststoff und CFK sein; die Trennfuge **8** befindet sich im CFK-Material. Anstelle der Aramidfaser kann Fasermaterial (z.B. aus Polyethylen, Polyamid oder Polyester) mit hoher Bruchdehnung Verwendung finden. Anstelle von CFK ist anderes Fasermaterial (z.B. Glasfasern, Keramikfasern, Borfasern) verwendbar.
Fig. 4 zeigt den typischen Schwenkbereich eines erfindungsgemässen Faserverbundgelenks **6**.

Das in Fig. 1 gezeigte Faserverbundgelenke wird wie folgt hergestellt:

### Schritt 1:

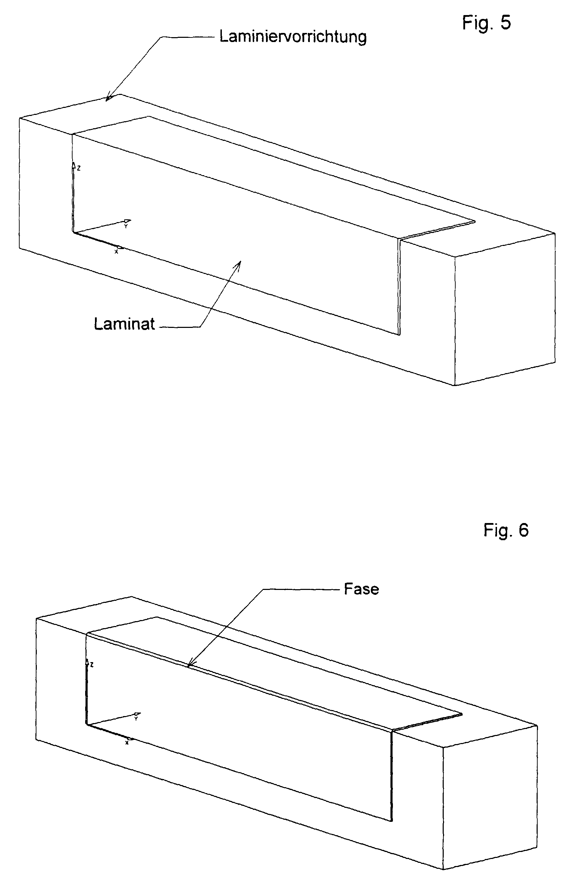

Auf einer prismatischen Vorrichtung wird entsprechend Fig. 5 ein mehrlagiger Aufbau aus Fasergeweben aufgebracht und mit Standardverfahren (Vakuum, evtl. Druck und Temperatur) ausgehärtet. Die Dicke der einzelnen Lagen sowie der Lagenaufbau kann dabei an den Einsatzzweck angepasst werden. Die erste Lage besteht dabei vorzugsweise aus Aramid oder ähnlichen Fasern, während die Folgelage(n) aus CFK bestehen.

### Schritt 2:

In Fig. 6 wird die Kante durch Abschleifen gebrochen. Man schleift einfach solange, bis unter dem schwarzen CFK-Laminat ein schmaler Streifen der gelben Aramidfaser zum Vorschein kommt. Diese Vorgehensweise erlaubt eine sehr gute Kontrolle der Menge des zu entfernenden Materials und stellt den eigentlichen Grund dar, die Fertigung in bereits abgewinkelter Konfiguration zu beginnen.

### Schritt 3:

Das Baute wird entformt und aufgeknickt, wodurch die in der Aramidlage noch enthaltene Harzmenge entlang des Knicks abplatzt, ohne dass die Fasern brechen. Man erhält so einen Gelenkstreifen mit einem Schwenkbereich.

Der erfindungsgemässe Herstellprozess ist sehr einfach und kostengünstig realisierbar.

Die bisher durchgeführten Funktionstests beschränken sich auf das wiederholte unsystematische Knicken der beiden Prototypen von Hand. Eine nach den ersten Lastwechseln zu bemerkende Verringerung des Knickwiderstands ist auf das "Abschütteln" der spröden Epoxidharzreste im Knickbereich zurückzuführen. Dabei erhöht sich zunächst das "Spiel" des Gelenks, es nähert sich aber schnell einem stabilen Grenzwert an.

Das verbleibende "Spiel", das sich daraus ergibt, dass der Knick nicht unendlich scharf sein kann und somit die Fasern über eine begrenzte Länge gebogen werden, ist allerdings im Gegensatz zum klassischen Lagerspiel von elastischer Natur, so dass unter definierten Lastbedingungen - z.B. für den Fall eines ausgeklappten und verriegelten Reflektors und (simulierter) Schwerelosigkeit - eine ausreichend stabile und wiederholbare Drehachslage zu erwarten ist.

Ein Bruch war bisher auch nach mehreren hundert Schwenkzyklen nicht zu beobachten.

Im folgenden finden sich einige Beispiele für den Einsatz der neuen Gelenktechnologie bei Raumfahrtanwendungen.

### Ausklappbarer Parabolreflektor

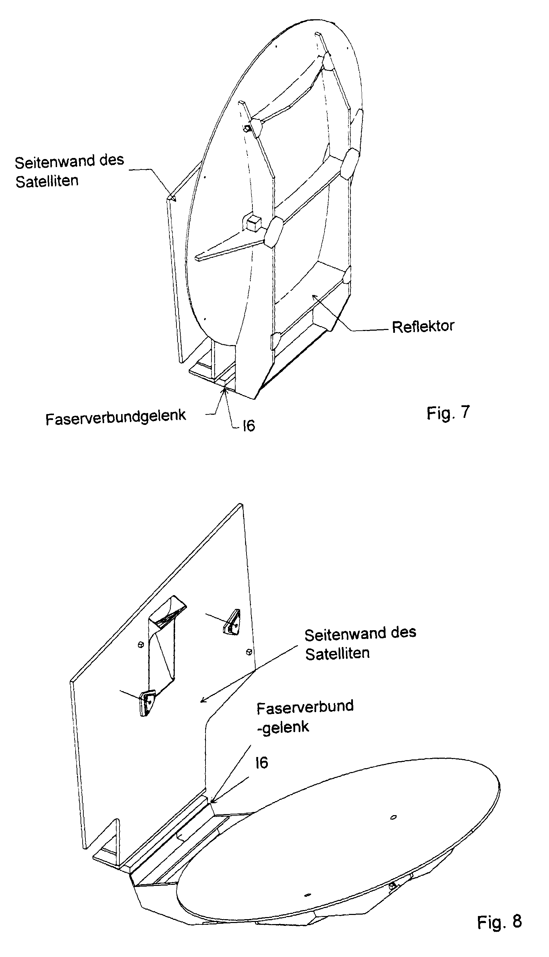

Der in Fig. 7 und 8 dargestellte Parabolreflektor mit einem Durchmesser von 1700 mm ist ursprünglich mit zwei mechanischen Gelenken ausgestattet. Die Strukturmasse des Reflektors beträgt einschliesslich aller Mechanismen etwa 14 kg, wovon 5 kg auf die beiden Gelenke einschliesslich Thermalisolation entfallen. Ersetzt man die beiden Gelenke durch einen Streifen des hier beschriebenen Faserverbundgelenks **16**, so könnten etwa 3 kg eingespart werden. Der nunmehr mögliche Verzicht auf eine Thermalisolation des Gelenks spart zusätzlich etwa 1 kg, so dass insgesamt ca 25 % eingespart werden können.

### Faltbare Flachantenne

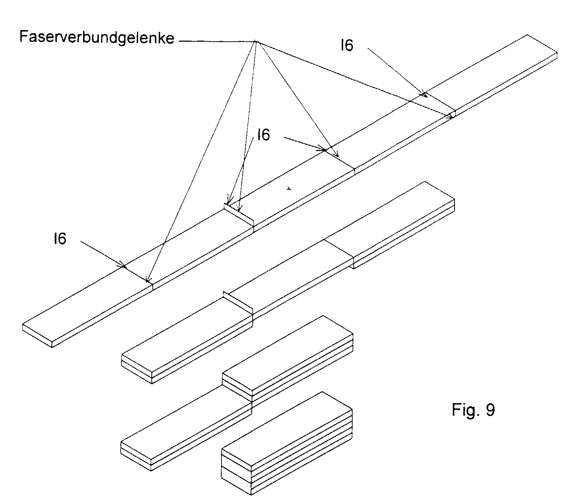

Fig. 9 zeigt den Klappvorgang einer typischen Radarantenne für die raumgestützte Erdbeobachtung, wobei die Gesamtlänge von 10 bis 15 m beträgt.

Die Klappachsen bestehen üblicherweise aus metallischen Beschlägen mit redundant arbeitenden Kugellagern. Ein Ersatz durch Faserverbundgelenke ist nicht nur im Hinblick auf die Kostenreduktion und Massenreduktion interessant. Der geringe Platzbedarf des hier vorgestellten Gelenks wäre zusätzlich zur Verminderung des Stauvolumens nutzbar.

### Faltbarer Parabolreflektor

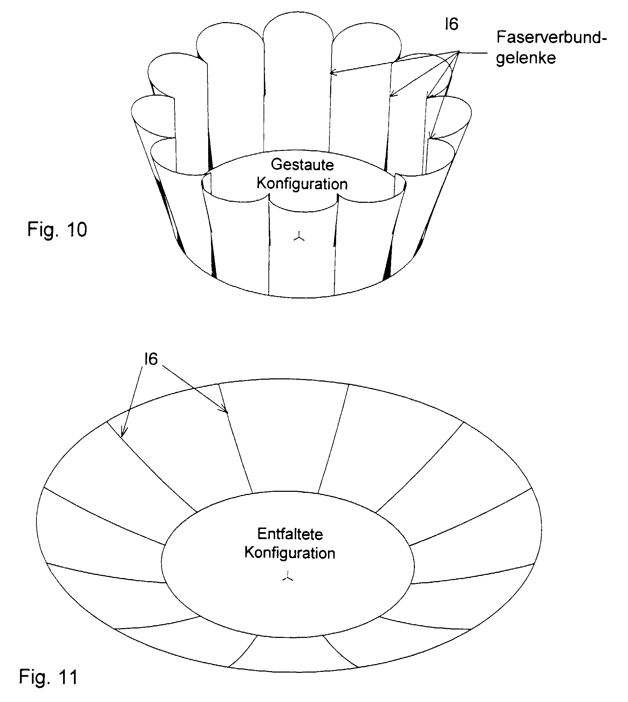

Der in Fig. 10 und 11 dargestellte Entwurf eines grossen Faltreflektors wird mit der Faserverbundgelenktechnologie erst möglich. Der Einsatz solcher Reflektoren ist sowohl für die Kommunikation als auch für den Einsatz als Konzentrator für die solarthermische Stromerzeugung interessant.

## Patentansprüche

1. Gelenk für Anwendungen in der Raumfahrt, bestehend aus einem Streifen eines ausgehärteten Faserverbundwerkstoffs, der aus zwei miteinander verbundenen faserverstärkten Materialien besteht, **dadurch gekennzeichnet,** dass eines der Materialien (**4, 6**) eine geradlinig verlaufende Trennfuge (**8**) aufweist, und das andere Material im Bereich der Trennfuge (**8**) geknickt wird..

2. Gelenk nach Anspruch 1, **dadurch gekennzeichnet,** dass die Trennfuge eine V-förmig gestaltete Nut (**10**) ist.

3. Gelenk nach Anspruch 1, **dadurch gekennzeichnet,** dass die Trennfuge eine U-förmig gestaltete Nut (**12**) ist.

4. Gelenk nach Anspruch 1, **dadurch gekennzeichnet,** dass die Trennfuge eine rechteckförmige Nut (**14**) ist.

5. Gelenk nach Ansprüchen 1 bis 4, **dadurch gekennzeichnet,** dass das mit einer Trennfuge (**8**) versehene Material aus CFK (oder Glasfasern oder Keramikfasern oder Borfasern) besteht und das andere Material aus Aramidfasern (oder aus Polyethylen oder Polyamid oder Polyester) besteht.
